# EUROPÄISCHE PATENTANMELDUNG

(11) **EP 2 966 118 A1**
(43) Veröffentlichungstag der Anmeldung: **13.01.2016**
(21) Anmeldenummer: 14176258.3
(22) Anmeldetag: 09.07.2014
(51) Int. Cl.: C08J 7/04, C08J 7/12

(54) **Verfahren zur Beschichtung von Kunststoffsubstraten**

(71) Anmelder: BASF Coatings GmbH, 48165 Münster (DE)
(72) Erfinder: Andersen, Audree, 48329 Havixbeck (DE); Heinz, Björn, Cupertino, CA 95014 (US); Haaf-Kleinhubbert, Christina, 69502 Hemsbach (DE); Noller, Bastian Marten, 64653 Lorsch (DE); Brannon, Helen, Birmingham, B15 2BQ (GB)

(57) **Zusammenfassung**

Die vorliegende Erfindung betrifft ein Verfahren zur Beschichtung von Kunststoffsubstraten mit einem wässrigen Beschichtungsmittel (A) enthaltend mindestens ein organisches Polymer als Bindemittel, wobei das Beschichtungsmittel auf mindestens eine Oberfläche (O) des Kunststoffsubstrats appliziert wird und anschließend gehärtet wird, dadurch gekennzeichnet, dass (i) vor der Applikation des Beschichtungsmittels (A) eine Carben-bildende Verbindung (C) der folgenden Formel (I) 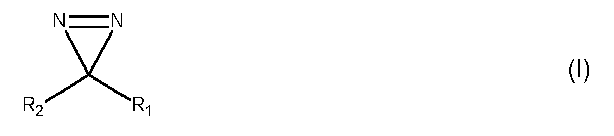 mit
R₁ = -(CX₂)ₙX, wobei X = F oder Cl und n = 0 oder 1 ist,
R₂ = 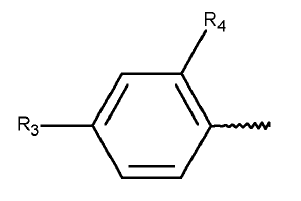 mit
R₃, R₄ unabhängig voneinander = -H, -(CH₂)ₘY, wobei Y = OH, CO₂H, NH₂ oder Br und m = 0 bis 4 ist,
wobei R₃ = R₄ = -H ausgeschlossen ist,

direkt auf die Oberfläche (O) appliziert wird sowie zur Carbenbildung aktiviert wird und/oder (ii) das Beschichtungsmittel (A) die Carben-bildende Verbindung (C) enthält und diese nach der Applikation des Beschichtungsmittels (A) zur Carbenbildung aktiviert wird. Die Erfindung betrifft auch mittels des Verfahrens hergestellte Beschichtungen sowie beschichtete Kunststoffsubstrate.

## Beschreibung

Die vorliegende Erfindung betrifft ein Verfahren zur Beschichtung von Kunststoffsubstraten mit einem wässrigen Beschichtungsmittel. Das Verfahren kann beispielsweise im Bereich der Fahrzeuglackierung, beispielsweise bei der Lackierung von Fahrzeugteilen und -zubehörteilen, Anwendung finden.

### Stand der Technik

Kunststoffe haben sich im Rahmen der Fahrzeuglackierung als Materialien für Fahrzeugteile sowie Fahrzeuganbau- und -zubehörteile sowohl im Innen- als auch im Außenbereich durchgesetzt. Kunststoffe werden ebenso wie andere Werkstoffe aus dekorativen Gründen (beispielsweise Farbgebung) und/oder aufgrund technischer Zweckmäßigkeit (beispielsweise Licht- und Wetterbeständigkeit) mit entsprechenden Beschichtungsmitteln beschichtet beziehungsweise lackiert. Eine wichtige Voraussetzung für eine qualitativ hochwertige Beschichtung ist die Haftung zum Untergrund, das heißt zur Substratoberfläche. Es ist allgemein bekannt, dass gerade bei der Beschichtung beziehungsweise Lackierung von Kunststoffen, insbesondere von unpolaren Kunststoffen, wie Polypropylen (PP) in reiner Form oder in modifizierter Form (beispielsweise durch Zusatz von Ethylen-Propylen-Dien-Mischpolymeren (EPDM)), mitunter gravierende Haftungsprobleme zum Kunststoffuntergrund auftreten können. Beim Einsatz wässriger Beschichtungsmittel, die aufgrund ökologischer Gesichtspunkte auch in der Kunststoffbeschichtung immer mehr zum Einsatz kommen sollen, sind die Haftungsprobleme insbesondere bei der Lackierung von unpolaren Kunststoffsubstraten aufgrund der Polaritätsunterschiede der beiden Medien, dem Kunststoffsubstrat und dem Beschichtungsmittel, nochmals verstärkt.

Um eine akzeptable Haftung des jeweiligen Beschichtungsmittels zu erreichen, werden solche unpolaren Kunststoffe herkömmlich einer oberflächenaktivierenden Vorbehandlung unterworfen. Die am häufigsten angewendeten Verfahren sind das Beflammen, die Plasmabehandlung und die Corona-Entladung.

Ebenso ist es bekannt, zur Haftungsverbesserung haftungsvermittelnde Substanzen, insbesondere chlorierte Polyolefine, einzusetzen. Der Einsatz der haftungsvermittelnden Substanzen erfolgt beispielsweise über Haftprimer, die die haftungsvermittelnden Substanzen enthalten und in einem separaten Beschichtungsvorgang auf das Kunststoffsubstrat appliziert werden. Ebenfalls möglich ist der direkte Zusatz von haftungsvermittelnden Substanzen zu dem Beschichtungsmittel, mit dem die dekorative und/oder technisch zweckmäßige Beschichtung hergestellt werden soll.

Auch wenn durch die beschriebene oberflächenaktivierende Vorbehandlung in der Regel zufriedenstellende Haftungseigenschaften erzielt werden, wäre es insbesondere im Bereich der industriellen Fahrzeuglackierung von Vorteil, beim Lackierungsprozess innerhalb der Produktionslinie auf die Schritte der beschriebenen Vorbehandlung verzichten zu können. Denn diese Vorbehandlung erfordert spezielles Equipment und spezielle Bedingungen und Sicherheitsvorkehrung. Der mögliche Verzicht wäre aus okölogischen und ökonomischen Gründen sehr vorteilhaft.

Auch der Einsatz chlorierter Polyolefine zur Verbesserung der Haftungseigenschaften mag zu annehmbaren Haftungseigenschaften führen, ist aber aus ökologischen Gesichtspunkten inakzeptabel. So bestehen beispielsweise im Raum der europäischen Union bereits Regelungen, die aufgrund der Umweltschädlichkeit den Einsatz solcher Substanzen verbieten beziehungsweise deutlich erschweren.

In der Patentanmeldung DE 199 61 983 A1 wird ein Verfahren zur Beschichtung von insbesondere unpolaren Kunststoffen mit wasserbasierten haftungsvermittelnden Überzugsmitteln offenbart, wobei die durch das Verfahren erhaltenen Beschichtungen eine gute Haftung aufweisen. Allerdings muss das Kunststoffsubstrat vor der Applikation der Überzugsmittel mit mindestens einem spezifischen organischen Lösemittel gereinigt werden. Das Überzugsmittel enthält zudem mindestens einen Haftvermittler, insbesondere ein chloriertes Polyolefin.

WO 2013/064506 A1 beschreibt ein Verfahren zur Beschichtung von Kunststoffsubstraten mit einem wässrigen Beschichtungsmittel, durch welches eine ausgezeichnete Haftung erzielt wird. Allerdings erfordert das Verfahren eine sehr komplexe, kombinierte Vorbehandlung aus Tempern des Kunststoffsubstrats und anschließender Beflammung. Aus schon genannten Gründen hat ein solches Verfahren gerade im Bereich der industriellen Fahrzeuglackierung gewisse Nachteile.

### Aufgabe der Erfindung

Aufgabe der vorliegenden Erfindung war es demzufolge, ein Verfahren zur Beschichtung von Kunststoffsubstraten mit einem wässrigen Beschichtungsmittel bereitzustellen, welches es gestattet, Kunststoffsubstrate mit einer Beschichtung beziehungsweise Lackschicht zu versehen, deren Haftung auf dem jeweiligen Kunststoffsubstrat ausgezeichnet ist. Gleichzeitig war es Aufgabe der Erfindung, auf die komplexe gängige Vorbehandlung, insbesondere die Beflammung, sowie auf den Einsatz chlorierter Polyolefine, verzichten zu können. Trotzdem sollten dann die beschriebenen hervorragenden Haftungseigenschaften erreicht werden. Auch wenn sich im Einzelfall die zusätzliche komplexe Vorbehandlung und/oder der Einsatz von chlorierten Polyolefinen anbieten kann, sollte im Rahmen der vorliegenden Erfindung die Möglichkeit gegeben werden, darauf verzichten zu können. Bevorzugt wird also im Rahmen des erfindungsgemäßen Verfahrens auf die zusätzliche komplexe Vorbehandlung (nämlich Beflammen und/oder Tempern) und den Einsatz chlorierter Polyolefine verzichtet. Das Verfahren ist somit insbesondere vorteilhaft im Rahmen von Lackierprozessen einzusetzen, bei denen eine hohe Durchsatzrate gewünscht ist. Insbesondere zu nennen ist dabei der Bereich der Automobilserienlackierung.

### Erfindungsgemäße Lösung

Erfindungsgemäß wird die Aufgabe gelöst durch ein Verfahren zur Beschichtung von Kunststoffsubstraten mit einem wässrigen Beschichtungsmittel (A) enthaltend mindestens ein organisches Polymer als Bindemittel, wobei das Beschichtungsmittel auf mindestens eine Oberfläche (O) des Kunststoffsubstrats appliziert wird und anschließend gehärtet wird,
dadurch gekennzeichnet, dass
(i) vor der Applikation des Beschichtungsmittels (A) eine Carben-bildende Verbindung (C) der folgenden Formel (I) 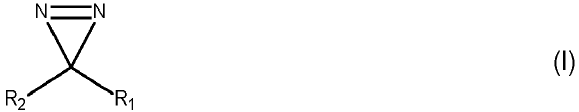 mit
   R₁ = -(CX₂)ₙX, wobei X = F oder Cl und n = 0 oder 1 ist,
   R₂ = 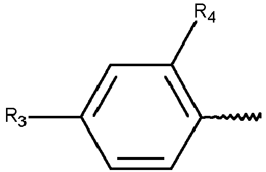 mit
      R₃, R₄ unabhängig voneinander = -H, -(CH₂)ₘY, wobei Y = OH, CO₂H, NH₂ oder Br und m = 0 bis 4 ist,
      wobei R₃ = R₄ = -H ausgeschlossen ist,
direkt auf die Oberfläche (O) appliziert wird sowie zur Carbenbildung aktiviert wird und/oder (ii) das Beschichtungsmittel (A) die Carben-bildende Verbindung (C) enthält und diese nach der Applikation des Beschichtungsmittels (A) zur Carbenbildung aktiviert wird.

Das Verfahren zur Beschichtung von Kunststoffsubstraten wird in der Folge als erfindungsgemäßes Verfahren bezeichnet. Weitere, bevorzugte Ausführungsformen des erfindungsgemäßen Verfahrens ergeben sich aus der folgenden Beschreibung.

Es wurde festgestellt, dass durch das erfindungsgemäße Verfahren und das damit verbundene Inkontaktbringen der Kunststoffsubstrate mit einem Carben Beschichtungen resultieren, die eine ausgezeichnete Haftung auf Kunststoffsubstraten, insbesondere unpolaren Kunststoffsubstraten, besitzen. Zudem ist eine klassische Vorbehandlung der Substratoberfläche, beispielsweise eine Beflammung, nicht notwendig, um eine gute Haftung zu erreichen. Das Inkontaktbringen mit dem Carben erfolgt auf einfache Weise, nämlich durch vor der Applikation des Beschichtungsmittels (A) erfolgende gängige Applikation einer Carben-bildenden Verbindung (C) auf das Substrat und dann folgende Aktivierung zur Carbenbildung und/oder durch Integration der Verbindung (C) in das Beschichtungsmittel (A), wobei in letzterem Fall die Aktivierung zur Carbenbildung nach der Applikation des Beschichtungsmittels (A) erfolgt, beispielsweise während der Härtung des Beschichtungsmittels.

### Allgemeine Beschreibung

### Wässriges Beschichtungsmittel (A)

Im Rahmen des erfindungsgemäßen Verfahrens wird ein wässriges Beschichtungsmittel (A) enthaltend mindestens ein organisches Polymer als Bindemittel eingesetzt. Dabei können die dem Fachmann in diesem Zusammenhang geläufigen Beschichtungsmittel eingesetzt werden. Das Beschichtungsmittel enthält mindestens ein organisches Polymer als Bindemittel. Diese organischen Polymere sind beispielsweise die dem Fachmann bekannten Polyurethan-, Polyester- und/oder Epoxidharze. Ebenfalls möglich ist der Einsatz von an sich bekannten Polyacrylat- und Polymethacrylatharzen (im Folgendem als Poly(meth)acrylatharze bezeichnet). Die genannten organischen Polymere als Bindemittel enthalten vorzugsweise zusätzlich unterschiedliche funktionelle Gruppen zur chemischen Vernetzung, wobei Hydroxygruppen bevorzugt sind. Bevorzugt werden Polyurethan-, Polyester- und/oder Poly(meth)acrylatharze, welche bevorzugt Hydroxygruppen enthalten, als Bindemittel eingesetzt. Solche organischen Polymere beziehungsweise Harze werden beispielsweise im Römpp-Lexikon Lacke und Druckfarben, Georg Thieme Verlag, Stuttgart, New York, 1998, Seiten 73 bis 74, beschrieben. Die Dispergierbarkeit der organischen Polymere beziehungsweise Harze in Wasser kann über die dem Fachmann geläufigen Maßnahmen durchgeführt werden. Dabei kann es sich um die ionische Modifizierung der organischen Polymere durch Einführung von Monomeren, die beispielsweise Carboxylat- oder Sulfonatgruppen enthalten, handeln. Möglich ist auch die nichtionische Modifizierung durch beispielsweise Polyglykoletherketten oder der Einsatz von bestimmten, weiter unten beschriebenen Additiven wie Dispergiermitteln, beispielsweise Emulgatoren.

Bei fremdvernetzenden Systemen sind beispielsweise neben den oben angeführten Harzsystemen zusätzlich vollveretherte und/oder teilveretherte Aminoplastharze, monomere und/oder polymere Polyamine sowie monomere und/oder polymere blockierte und/oder freie Polyisocyanate im wässrigen Beschichtungsmittel als Vernetzer enthalten. Im Rahmen des erfindungsgemäßen Verfahrens werden bevorzugt vollveretherte und/oder teilveretherte Aminoplastharze, insbesondere bevorzugt vollveretherte und/oder teilveretherte Melamin-Formaldehyd-Harze eingesetzt.

Die Auswahl und Kombination von geeigneten organischen Polymeren und Monomeren, beispielsweise von geeigneten Polyurethan-, Polyester-, Poly(meth)acrylat- und/oder Epoxidharzen mit geeigneten funktionellen Gruppen, vorzugsweise Hydroxygruppen, und gegebenenfalls Aminoplastharzen, Polyaminen und/oder Polyisocyanaten erfolgt je nach den gewünschten und/oder erforderlichen Eigenschaften des herzustellenden Beschichtungssystems. Eine weiteres Auswahlkriterium sind die gewünschten und/oder erforderlichen Härtungsbedingungen, insbesondere die Härtungstemperaturen. Wie eine solche Auswahl zu treffen ist, ist dem Fachmann auf dem Gebiet bekannt und kann von diesem entsprechend angepasst werden. Möglich sind dabei die an sich bekannten EinKomponenten sowie Zwei-Komponenten-Beschichtungssysteme (vergleiche hierzu auch Römpp-Lexikon Lacke und Druckfarben, Georg Thieme Verlag, Stuttgart, New York, 1998, Seiten 274-276, sowie Seiten 641-642). Bevorzugt kommen EinKomponenten Systeme zum Einsatz.

Besonders bevorzugt wird im Rahmen des erfindungsgemäßen Verfahrens eine Kombination aus mindestens einem hydroxyfunktionellen Polyurethan-, Polyester- und/oder Poly(meth)acrylatharz als Bindemittel und mindestens einem vollveretherten und/oder teilveretherten Melamin-Formaldehyd-Harz als Vernetzer eingesetzt. Vorteilhafterweise liegt der Anteil aller filmbildenden Komponenten, insbesondere des mindestens einen hydroxyfunktionellen Polyurethan-, Polyester- und/oder Poly(meth)acrylatharzes als Bindemittel und des mindestens einem vollveretherten und/oder teilveretherten Melamin-Formaldehyd-Harz als Vernetzers im Bereichen von 10 bis 90 Gew.-%, insbesondere von 15 bis 60 Gew.-%, besonders bevorzugt im Bereich von 20 bis 50 Gew.-%, jeweils bezogen auf die Gesamtmenge des wässrigen Beschichtungsmittels. Der Anteil eines jeweils separat betrachteten Harzes als Bindemittel sowie eines Vernetzers liegt vorteilhafterweise nicht unter 3 Gew.-%, bezogen auf die Gesamtmenge des wässrigen Beschichtungsmittels.

Des Weiteren kann das wässrige Beschichtungsmittel (A) mindestens ein übliches und bekanntes farbgebendes und/oder effektgebendes Pigment enthalten. Vorteilhafterweise enthält das Beschichtungsmittel mindestens ein Pigment.

Beispiele für solche Pigmente sind Pigmente auf anorganischer Basis, wie beispielsweise Titandioxid, Eisenoxid und Ruß oder auch übliche Metallpigmente (beispielsweise handelsübliche Aluminiumbronzen, Edelstahlbronzen) und nichtmetallische Effektpigmente (beispielsweise Perlglanz- beziehungsweise Interferenzpigmente). Auch farbgebende Pigmente auf organischer Basis wie Azopigmente und Phthalocyaninpigmente können zum Einsatz kommen. Der Anteil von Pigmenten am Beschichtungsmittel liegt beispielsweise im Bereich von 0 bis 20 Gew.-%, bevorzugt 2 bis 15 Gew.-%, jeweils bezogen auf die Gesamtmenge des wässrigen Beschichtungsmittels. Die Auswahl von Art und einzusetzender Menge von Pigmenten erfolgt in der dem Fachmann geläufigen Art und Weise und richtet sich nach den erforderlichen beziehungsweise gewünschten Eigenschaften des Beschichtungsmittels. Ergänzend sei hierzu auf Römpp-Lexikon Lacke und Druckfarben, Georg Thieme Verlag, Stuttgart, New York, 1998, Seiten 451, verwiesen.

Des Weiteren können die wässrigen Beschichtungsmittel (A) neben Wasser auch organische Lösemittel enthalten. Enthalten sein können beispielsweise aliphatische und/oder aromatische Kohlenwasserstoffe wie Toluol, Xylol, Solventnaphtha, Solvesso 100, Shellsol A, Ketone, wie Aceton, Methylethylketon oder Methylamylketon, Ester, wie Ethylacetat, Butylacetat, Pentylacetat oder Ethylethoxypropionat, Ether wie Butylglycol, Dipropylenglycolmethylether, Alkohole wie Ethylhexanol, Butoxypropanol, Isopropanol oder Butyldiglycol oder Mischungen aus den vorgenannten Lösemitteln. Bevorzugt eingesetzt werden wassermischbare organische Lösemittel.

Das einzusetzende Beschichtungsmittel (A) ist wässrig. Wässrig ist eine dem Fachmann geläufige Spezifizierung von Beschichtungsmitteln, die als Lösemittel nicht ausschließlich organische Lösemittel enthalten, sondern auch auf Wasser als Lösemittel basieren. Wässrig bedeutet im Rahmen der vorliegenden Erfindung insbesondere, dass das Beschichtungsmittel mindestens 10 Gew.-%, bevorzugt mindestens 20, ganz besonders bevorzugt mindestens 25 Gew.-% Wasser, jeweils bezogen auf die Gesamtmenge des Beschichtungsmittels, enthält. Besonders bevorzugt ist wässrig so zu verstehen, dass neben der genannten Anforderung "mindestens 10 Gew.-% (beziehungsweise mindestens 20 oder 25 Gew.-%) Wasser, bezogen auf die Gesamtmenge des Beschichtungsmittels" als weitere Voraussetzung zu erfüllen ist, dass der Anteil organischer Lösemittel in dem Beschichtungsmittel kleiner als 25 Gew.-%, insbesondere kleiner als 20 Gew.-%, jeweils bezogen auf die Gesamtmenge des Beschichtungsmittels, ist.

Weiterhin kann in dem wässrigen Beschichtungsmittel (A) mindestens ein an sich bekanntes Lackadditiv enthalten sein. Solche Lackadditive sind beispielsweise, aber nicht ausschließlich,
- Entschäumer,
- Reaktivverdünner,
- Polymerisationsinhibitoren,
- Slipadditive,
- Netzmittel wie Siloxane, fluorhaltige Verbindungen, Carbonsäurehalbester
- Katalysatoren, wie acide phosphorhaltige Katalysatoren auf Basis von beispielsweise substituierten Phosphonsäurediestern oder substituierten Phosphorsäureestern,
- Verlaufmittel,
- rheologiesteuernde Additive,
- Dispergiermittel,
- UV-Stabilisatoren,
- Füllstoffe wie Siliciumdioxid, Aluminiumsilikat oder Bariumsulfat
- und/oder Flammschutzmittel.

Solche Lackadditive sind beispielsweise im Handel von unterschiedlichen Anbietern erhältlich. Der Anteil eines jeweiligen Additivs liegt vorteilhafterweise bei kleiner 10 Gew.-%, insbesondere bei kleiner 5 Gew.-%, besonders bevorzugt bei kleiner 3 Gew.-%, jeweils bezogen auf die Gesamtmenge des wässrigen Beschichtungsmittels. Bevorzugt ist das wässrige Beschichtungsmittel im Wesentlichen frei von chlorierten Polyolefinen. Im Rahmen der vorliegenden Erfindung ist "im Wesentlichen frei von" einer jeweiligen Substanz(en) so zu verstehen, dass das wässrige Beschichtungsmittel nicht mehr als 5 Gew.-%, insbesondere nicht mehr als 2,5 Gew.-%, besonders bevorzugt nicht mehr als 2,0 Gew.-%, ganz besonders bevorzugt nicht mehr als 1,0 Gew.-% der jeweiligen Substanz(en), jeweils bezogen auf die Gesamtmenge des Beschichtungsmittels, enthält. In einer ganz besonders bevorzugten Ausführungsform ist das wässrige Beschichtungsmittel vollständig frei von chlorierten Polyolefinen.

Das Beschichtungsmittel kann auch mindestens eine wie weiter unten stehend genauer beschriebene Carben-bildende Verbindung (C) enthalten. Dabei kann das Beschichtungsmittel die Carben-bildende Verbindung (C) in ihrer ursprünglichen Form enthalten (vergleiche Formel (I)). Ebenso ist es möglich, dass eine Verbindung (C) unter Erhalt ihrer Fähigkeit zur Carbenbildung zuvor mit einer weiteren Komponente, die in dem Beschichtungsmittel (A) enthalten ist, kovalent verknüpft wird. Diese Ausführungsform ist im Rahmen der vorliegenden Erfindung ausdrücklich umfasst, wenn angegeben ist, dass das Beschichtungsmittel (A) die Carben-bildende Verbindung (C) enthält. Denn die Fähigkeit zur Carbenbildung bleibt dabei erhalten und zudem ist die Verbindung (C), wenn auch in nunmehr verknüpfter Form, nach wie vor in dem Beschichtungsmittel enthalten. Beispielhaft sei die Umsetzung eines in dem Beschichtungsmittel (A) eingesetzten Polyisocyanats mit einer hydroxyfunktionellen oder aminofunktionellen Verbindung (C) genannt. Die Verknüpfung erfolgt dabei auf an sich bekannte Weise durch Ausbildung einer Urethan- oder Harnstofffunktion.

Sofern enthalten, liegt der Anteil der Carben-bildenden Verbindung (C), jeweils bezogen auf die Gesamtmenge des wässrigen Beschichtungsmittels (A), beispielsweise im Bereich von 0,1 bis 10 Gew.-%. In der Variante, in der eine wie beschrieben umgesetzte Verbindung (C) eingesetzt wird, wird der Anteil demnach unter Berücksichtigung der Menge der bei der Umsetzung eingesetzten Verbindung (C) berechnet.

Insbesondere handelt es sich bei dem wässrigen Beschichtungsmittel um einen wässrigen Basislack. Als Basislack wird bekanntermaßen ein pigmenthaltiges Beschichtungsmittel bezeichnet, dass insbesondere in der Automobillackierung aber auch in der allgemeinen Industrielackierung zum Aufbau einer farbgebenden Beschichtung, insbesondere einer farbgebenden Zwischenbeschichtung im Rahmen einer Mehrschichtlackierung auf beispielsweise einem Kunststoffsubstrat eingesetzt werden kann. Auf der so aufgebauten Zwischenbeschichtung wird dann häufig eine Klarlackschicht aufgebaut, wodurch die klassische Mehrschichtbeschichtung hergestellt wird.

Die Herstellung des wässrigen Beschichtungsmittels, insbesondere des wässrigen Basislacks, weist methodisch gesehen keine Besonderheiten auf, sondern erfolgt nach den üblichen und bekannten Methoden mit Hilfe von üblichen und bekannten Mischaggregaten wie Rührkesseln oder Dissolvern.

### Ku nststoffsu bstrate

Bei den durch das erfindungsgemäße Verfahren zu beschichtenden beziehungsweise zu lackierenden Kunststoffsubstraten handelt es sich um solche aus üblichen Kunststoffen wie beispielsweise Polystyrol (PS), Polyvinylchlorid (PVC), Polyurethan (PUR), glasfaserverstärkte ungesättigte Polyester, Polymethylmethacrylat (PMMA), Polyphenylensulfid (PPS), Polyoxymethylen (POM), Polyphenylenether (PPE), Polyphenylenoxid (PPO), Polyharnstoff, Polybutadienterephthalat (PBT), Polycarbonat (PC), Acrylnitril-Butadien-Styrol-Copolymere (ABS), Polyolefine wie Polypropylen (PP) und Polypropylen (PP), gegebenenfalls modifiziert mit Ethylen-Propylen-Dien-Mischpolymeren (EPDM) sowie Ethylen-Propylen-Rubber (EPR). Möglich sind dabei auch Kunststoffsubstrate, die verschiedene der genannten Kunststoffe, demnach also Mischungen dieser Kunststoffe, enthalten.

Besonders vorteilhaft kann das erfindungsgemäße Verfahren eingesetzt werden zur Beschichtung von unpolaren Kunststoffen, wie insbesondere Polyolefinen wie PP und von mit EPDM-Anteilen modifiziertem PP. Die Modifizierung von PP mit EPDM dient im Wesentlichen der Elastifizierung des Kunststoffs und bestimmt unter anderem auch die Lackierbarkeit. Bei geringen EPDM-Anteilen ist die Lackierbarkeit beziehungsweise die Haftung in der Regel schlecht. Erst bei EPDM-Anteilen von etwa 20 bis 25 Gew.-% spricht man im Stand der Technik nicht mehr von schwer lackierbaren Kunststoffen. Das erfindungsgemäße Verfahren kann aber ganz besonders vorteilhaft zur Lackierung von Polypropylen/EPDM-Kunststoffen mit niedrigen EPDM-Anteilen von beispielsweise nicht höher als 25 Gew.-%, insbesondere nicht höher als 10 Gew.-% eingesetzt werden. Ganz besonders bevorzugt kann es bei der Beschichtung von reinem Polyolefin, insbesondere Polypropylen, zur Anwendung kommen. Während es bei Beschichtungsverfahren des Stands der Technik, insbesondere bei Verfahren, bei denen die Vorbehandlung mittels Beflammung involviert ist, zum Erreichen einer guten Haftung auf einen signifikanten Anteil von durch das EPDM eingebrachten Kohlenstoff-Kohlenstoff-Doppelbindungen ankommt, kann hierauf im Rahmen der vorliegenden Erfindung überraschenderweise verzichtet werden. Ohne an eine bestimmte Theorie gebunden sein zu wollen, wird davon ausgegangen, dass die im Rahmen des erfindungsgemäßen Verfahrens gebildeten Carbene als sehr reaktive Verbindungen zumindest teilweise mit der Kunststoffoberfläche kovalente Verknüpfungen eingehen, und zwar auch dann, wenn keine Kohlenstoff-Kohlenstoff-Doppelbindungen in der Kunststoffmatrix vorhanden sind. Durch die kovalente Verknüpfung wird dann eine Oberflächenmodifizierung erzielt, die zur verbesserten Haftung der folgenden Beschichtung beiträgt. Bevorzugte Kunststoffsubstrate sind also Polyolefin-Kunststoffsubstrate.

Bei den Kunststoffsubstraten kann es sich um einfache Kunststoffplatten handeln. Möglich sind als Substrate aber auch Fahrzeugkarosserien aus Kunststoffen oder bestimmte Fahrzeugteile sowie Fahrzeuganbau- und -zubehörteile für sowohl den Fahrzeuginnen- als auch den Fahrzeugaußenbereich.

### Carben-bildende Verbindung (C)

Die Carben-bildende Verbindung (C), welche wie oben beschrieben in dem Beschichtungsmittel (A) enthalten ist und/oder welche wie unten beschrieben vor der Applikation des Beschichtungsmittels direkt auf die Oberfläche des Kunststoffsubstrats appliziert wird, hat die folgende Formel (I): 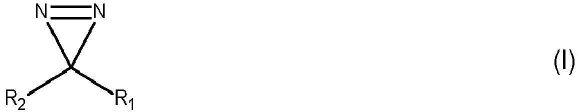 mit
R₁ = -(CX₂)ₙX, wobei X = F oder Cl und n = 0 oder 1 ist,
R₂ = 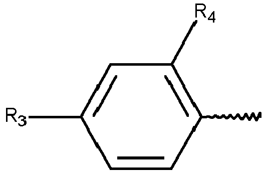 mit
   R₃, R₄ unabhängig voneinander = -H, -(CH₂)ₘY, wobei Y = OH, CO₂H, NH₂ oder Br und m = 0 bis 4 ist,
   wobei R₃ = R₄ = -H ausgeschlossen ist.

Die Verbindungen (C) sind demnach Diazoverbindungen, weisen genauer gesagt jeweils eine Diaziridingruppe auf. Bekanntermaßen handelt es sich bei einer Diaziringruppe um eine funktionelle Gruppe, die durch Thermo- oder Photolyse und entsprechende Abspaltung eines Stickstoffmoleküls ein Carben bilden kann. Demzufolge werden die Verbindungen (I) im Rahmen der vorliegenden Erfindung definitionsgemäß und der besseren Übersichtlichkeit halber auch als Carben-bildende Verbindungen bezeichnet. Unter Aktivierung zur Carbenbildung ist demnach definitionsgemäß zu verstehen, dass eine solche Verbindung entsprechenden Bedingungen ausgesetzt wird, die zur Thermo- und/oder Photolyse führen können (das heißt thermische Energie und/oder elektromagnetische Strahlung wie UV-Strahlung wird zugeführt), wobei die Verbindung (C) zum Carben reagiert. Im Rahmen der vorliegenden Erfindung ist die photolytische Aktivierung, das heißt die Aktivierung durch Aussetzung mit elektromagnetischer Strahlung, insbesondere UV-Strahlung, bevorzugt. Durch diese Form der Aktivierung resultiert eine besonders gut haftende Beschichtung. Eine noch weitergehende Erläuterung der Aktivierung folgt weiter unten.

Die Verbindung (C) weißt als Rest R₁ eine offensichtlich elektronenziehende Gruppe auf, beispielsweise eine CF₃-Gruppe (Gruppen mit entsprechend negativem induktivem Effekt (-I-Effekt)). Als Reste R₁ kommen nach obiger Formel die halogenhaltigen Reste -CF₃ und -CCl₃ beziehungsweise die Halogenid-Reste -F und -Cl in Frage. Der jeweilige Rest R₁ ist dann an dem Kohlenstoffatom des Dreirings enthaltend die Diaziridingruppe angebunden. Bevorzugte handelt es sich bei R₁ um CF₃ oder Cl, ganz besonders bevorzugt CF₃.

Die Verbindung (C) weist ferner einen substituierten Phenylrest R₂ auf, welche ebenfalls an dem Kohlenstoffatom des Dreirings enthaltend die Diaziridingruppe angebunden ist. Der Phenylrest ist, betrachtet vom Kohlenstoffatom des Phenylrings, an dem der Diaziridinring angebunden ist, in ortho- und/oder para-Position substituiert. Substituiert heißt im Einklang mit der in diesem Zusammenhang gebräuchlichen Wortwahl, das vorliegend in ortho- und/oder para-Position an dem entsprechenden Kohlenstoffatom des Phenylrings ein von Wasserstoff verschiedener Rest (ortho-Position R₄, para-Position R₃) angeordnet ist. Diese von H verschiedenen Reste sind ausgewählt aus der Gruppe bestehend aus -(CH₂)ₙY, wobei Y = OH, CO₂H, NH₂, Br und m = 0 bis 4. Bevorzugt ist Y = OH, CO₂H. Es handelt sich also um Gruppen, die insbesondere durch die OH, CO₂H, NH₂ oder Br polarer sind, als dies für beispielsweise reine Alkylreste oder Wasserstoff der Fall ist. Die polare Gruppe kann direkt an dem Phenylring angebunden sein (m = 0) oder aber über eine Methylengruppe (m = 1) oder Ethylengruppe (m = 2) verknüpft sein. Möglich ist auch, das ein linearer Rest -(CH₂)-(CH₂)-(CH₂) - (m = 3) oder -(CH₂)-(CH₂)-(CH₂)-(CH₂) - (m = 4) als verbrückende Gruppe enthalten ist. Bevorzugt ist Y = OH oder CO₂H. Für m gilt bevorzugt 0 oder 1.

Für bevorzugte Verbindungen (C) gilt R₃ oder R₄ = H. Insbesondere bevorzugt gilt R₄ = H und R₃ = OH, CO₂H, CH₂OH, CH₂CO₂H, insbesondere bevorzugt R₄ = H und R₃ = CO₂H oder CH₂OH. Der Phenylring der Verbindung (C) ist also bevorzugt ein in para-Position zum Diaziridinring subsituierter Phenylring.

### Verfahren zur Beschichtung

Das erfindungsgemäße Verfahren zur Beschichtung umfasst in seiner ersten Ausführungsform (i) zunächst die Applikation einer Carben-bildenden Verbindung (C) direkt auf eine Oberfläche (O) des Kunststoffsubstrats sowie die dann folgende Aktivierung der Verbindung (C) zur Carbenbildung. Erst danach wird das wässrige Beschichtungsmittel auf die Oberfläche (O) des Kunststoffsubstrats appliziert und anschließend gehärtet.

Die Applikation einer Komponente, beispielsweise einer Verbindung (C) oder eines wässrigen Beschichtungsmittels direkt auf eine Oberfläche eines Substrats versteht sich wie folgt. Die jeweilige Komponente wird so aufgebracht, dass die Komponente nach dem Aufbringen auf der Oberfläche des Substrats angeordnet ist und in direktem Kontakt mit der Oberfläche steht. Zwischen der durch die aufgebrachte Komponente gebildeten Schicht und der Oberfläche des Substrats ist also insbesondere keine andere Schicht angeordnet.

Die Applikation einer Komponente, beispielsweise einer Verbindung (C) oder eines wässrigen Beschichtungsmittels auf ein Substrat (ohne die Spezifizierung "direkt") versteht sich daher wie folgt. Die jeweilige Komponente wird so aufgebracht, dass die Komponente nach dem Aufbringen auf der Oberfläche des Substrats angeordnet ist, wobei nicht zwangsläufig ein direkter Kontakt mit der Oberfläche besteht. Zwischen der Schicht und der Oberfläche des Substrats können beispielsweise noch andere Schichten angeordnet sein. Eine nicht näher spezifizierte Applikation umfasst als Oberbegriff also die direkte und die nicht-direkte Applikation.

Beispielsweise wird im Rahmen der ersten Ausführungsform der vorliegenden Erfindung die Verbindung (C) direkt auf eine Oberfläche (O) des Kunststoffsubstrats appliziert und anschließend zur Carbenbildung aktiviert. Nimmt man an, dass hierdurch eine kontinuierliche Schicht direkt auf dem Substrat gebildet wird, hat dies unmittelbar zur Folge, dass das Beschichtungsmittel (A), welches im Anschluss an die Applikation und Aktivierung der Verbindung (C) appliziert wird, nicht mehr direkt auf die Oberfläche (O) appliziert wird, da dazwischen bereits eine Schicht angeordnet ist.

Die Applikation einer Komponente auf eine Oberfläche (O) eines Substrats ist gleichbedeutend mit der Ausbildung einer Schicht beziehungsweise Beschichtung auf der Oberfläche des Substrats. Eine solche Beschichtung wird in der Regel kontinuierlich sein, das heißt die gesamte Oberfläche abdecken. Natürlich kann es auch vorkommen, dass eine Beschichtung nicht völlig kontinuierlich ist, sodass nicht die gesamte Oberfläche des Substrats abgedeckt ist. Solche Beschichtungen resultieren oft dann, wenn nur vergleichsweise wenig Material aufgebracht wird. Wird im Rahmen der vorliegenden Erfindung eine Schichtdicke einer Schicht angegeben, so ist hierrunter die mittlere Schichtdicke zu verstehen.

Dem Fachmann ist klar, dass bei niedrigen mittleren Schichtdicken von beispielsweise weniger als 0,1 Mikrometern Trockenschichtdicke nicht mehr unbedingt von einer homogenen Beschichtung ausgegangen werden kann.

Die Applikation einer Verbindung (C) kann nach üblichen und bekannten Methoden erfolgen. Beispielsweise kann eine Verbindung (C) in einem organischen Lösemittel, bevorzugt Aceton, Methylethylketon, Cyclohexan und/oder Tetrahydrofuran, bevorzugt Methylethylketon, gelöst werden und dann durch übliche Applikationsmethoden wie Spritzen, Gießen, Tauchen, Tränken oder Träufeln aufgetragen werden. Bevorzugt ist die Spritzapplikation. Bevorzugt wird eine Verbindung (C) in Form einer Lösung in einem organischen Lösemittel appliziert. Die Konzentration der Lösung kann je nach Anwendung breit variieren und beispielsweise im Bereich von 0,001 bis 1 mol/l liegen. Die Lösung kann selbstverständlich auch mehr als eine Verbindung (C) enthalten, wobei dann der angegebene Konzentrationsbereich für die Gesamtkonzentration aller enthaltenen Verbindungen (C) steht.

Die applizierte Lösung der Verbindung (C) in einem organischen Lösemittel wird dann bevorzugt für eine Zeitdauer von 1 bis 60 Minuten bei Raumtemperatur (das heißt 10 bis 40°C) abgelüftet. Dabei verdampft zumindest der Großteil des organischen Lösemittels, wobei die Verbindung (C) dann in fein verteilter Form auf dem Substrat vorliegt.

Nach der Applikation und dem gegebenenfalls erfolgten Ablüften wird die Carben-bildende Verbindung (C) zur Carbenbildung aktiviert. Eine solche Aktivierung umfasst definitionsgemäß die Zuführung thermischer Energie und/oder das Aussetzen mit elektromagnetischer Strahlung, bevorzugt UV-Strahlung. Mit der Aktivierung untrennbar verbunden beziehungsweise von dem Begriff "Aktivierung" definitionsgemäß umfasst ist somit auch die Reaktion zumindest eines Teils der auf eine Oberfläche (O) des Kunststoffsubstrats applizierten Verbindung (C) zum Carben unter Freisetzung von Stickstoff. Dass unter den genannten Aktivierungsbedingungen aus den Verbindungen der Formel (C) Carbene entstehen, ist bekannt. Ohne an eine bestimmte Theorie gebunden sein zu wollen, ist jedenfalls anzunehmen, dass die gebildeten Carbene, welche bekanntermaßen sehr instabil sind, beispielsweise mit der Oberfläche des Kunststoffsubstrats Reaktion eingehen und dadurch eine feste Verknüpfung mit der Substratoberfläche bewirkt wird.

Die Aktivierung kann thermisch erfolgen (Thermolyse). Bevorzugt wird dabei die auf die Oberfläche applizierte Verbindung (C) für eine Zeitdauer von 5 bis 120 Minuten, bevorzugt 20 bis 60 Minuten, bei 60 bis 140°C, bevorzugt 80 bis 120°C, behandelt. Dies kann in konventionellen Öfen, beispielsweise einem Umluftofen, erfolgen.

Es versteht sich, dass dabei die Temperatur jedenfalls so gewählt wird, dass das jeweils gewählte Kunststoffsubstrat im Rahmen der beschriebenen Thermolyse seine ursprüngliche Form beibehält und sich nicht verformt oder zersetzt. Dem Fachmann ist jedenfalls bekannt, bei welcher Temperatur sich welches Kunststoffsubstrat verformt beziehungsweise ab welcher Temperatur die Erweichung des jeweiligen Materials auftritt. Die entsprechenden Bedingungen können also problemlos auf den entsprechenden Einzelfall angepasst werden.

Ebenfalls möglich ist die Aktivierung durch Aussetzung mit elektromagnetischer Strahlung, insbesondere UV-Strahlung. Relevante UV-Strahlung liegt typischerweise im Spektralbereich von etwa 100 bis 380 Nanometer. UV-Strahlung zur Aktivierung kann bekanntermaßen durch den Einsatz typischer und im Handel erhältlicher Quecksilberdampflampen erzeugt werden. Das Emissionsspektrum solcher Lampen ist bekanntermaßen ein Linienspektrum mit Spektrallinien im UV-Bereich bei etwa 184, 254, 297, 313, 334 und 365 Nanometern. Solche Quecksilberdampflampen sind in typischen UV Härtungsapparaturen enthalten. Entsprechende Apparaturen gibt es beispielsweise von der Fa. IST Strahlentechnik Metz GmbH (Deutschland), beispielsweise den Modelltyp M-40-2*1-R-Ir-SLC-So-inert, UV Lampentyp (Quecksilberdampflampentyp) M 400 U 2 H. Die bei der Bestrahlung abgegebene Energie liegt beispielsweise im Bereich von 500 bis 3000 mJ pro cm² der Substratoberfläche, auf die die Verbindung (C) appliziert wurde. Dies wird durch UV-Bestrahlung der Substrate unter Verwendung entsprechender Apparaturen für Zeitdauern von beispielsweise 0,1 bis 10 Sekunden, insbesondere 1 bis 5 Sekunden, erreicht.

Die Applikation der Verbindung (C) erfolgt so, dass nach der Aktivierung und der damit verbundenen Evaporation von organischen Lösemitteln auf dem Substrat eine Schicht mit einer Trockenschichtdicke von beispielsweise 0,2 bis 5 Mikrometern, bevorzugt 0,3 bis 3 Mikrometern verbleibt. Die Bestimmung der Trockenschichtdicken erfolgte im Rahmen der vorliegenden Erfindung über magnetisch-induktive Messung gemäß DIN EN ISO 2178. Die Anwendung dieser für ferromagnetische Substrate ausgelegten Messmethode wurde wie folgt ermöglicht. Neben dem jeweiligen Kunststoffsubstrat wurde gleichzeitig beziehungsweise parallel auf die jeweils selbe Weise ein metallisches Substrat beschichtet. Die gemessenen Schichtdicken auf dem metallischen Substrat wurden dann mit den Schichtdicken auf dem Kunststoffsubstrat gleichgesetzt.

Im Anschluss an die Applikation und Aktivierung der mindestens einen Verbindung (C) erfolgt die Applikation des wie oben beschriebenen Beschichtungsmittels (A) auf die bereits beschichtete Oberfläche (O) des Substrats. Bevorzugt wird das Beschichtungsmittel (A) direkt auf die nach Applikation und Aktivierung der Verbindung (C) erhaltene Schicht appliziert.

Die Applikation des wässrigen Beschichtungsmittels kann durch alle üblichen Applikationsmethoden, wie beispielsweise Spritzen, Rakeln, Streichen, Gießen, Tauchen, Tränken, Träufeln oder Walzen, vorzugsweise durch Spritzapplikation, erfolgen. Dabei kann das zu beschichtende Kunststoffsubstrat als solches ruhen, wobei die Applikationseinrichtung oder -anlage bewegt wird. Indes kann auch das zu beschichtende Substrat bewegt werden, wobei die Applikationsanlage relativ zum Substrat ruht oder in geeigneter Weise bewegt wird. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heißspritzapplikation wie zum Beispiel Hot-Air-Heißspritzen.

Das auf die Oberfläche (O) des Kunststoffsubstrats (beziehungsweise das direkt auf die durch Applikation und Aktivierung einer Verbindung (C) erhaltene Schicht) applizierte wässrige Beschichtungsmittel wird gehärtet, wodurch eine gehärtete Beschichtung hergestellt wird. Die Härtung des applizierten wässrigen Beschichtungsmittels weist keine methodischen Besonderheiten auf, sondern erfolgt nach den üblichen und bekannten Methoden wie beispielsweise Erhitzen in einem Umluftofen oder durch Bestrahlen mit IR-Lampen. Möglich ist auch die aktinische Härtung durch beispielsweise UV-Strahlung bei strahlenhärtenden Systemen. Die Härtungsbedingungen, insbesondere die Härtungstemperaturen, richten sich beispielsweise nach der Temperaturempfindlichkeit der verwendeten Kunststoffsubstrate sowie nach den eingesetzten wässrigen Beschichtungsmitteln, beispielsweise danach, ob das jeweils eingesetzte wässrige Beschichtungsmittel selbst- oder fremdvernetzende Bindemittel und gegebenenfalls Vernetzer enthält. So kann die Härtung zum Beispiel im Bereich der Raumtemperatur oder auch bei erhöhten Temperaturen im Bereich von beispielsweise 40°C bis 120°C, bevorzugt von 60°C bis 100°C erfolgen. Auch die Zeitdauer der Härtungsphase wird individuell gewählt und ist unter anderem abhängig von den schon genannten Faktoren (beispielsweise Wahl der Bindemittel und/oder der Härtungstemperaturen). Beispielsweise kann die Härtung über einen Zeitraum von 5 min bis 120 min, bevorzugt 10 min bis 40 min, erfolgen. Der Härtung kann gegebenenfalls auch eine Ablüft- beziehungsweise Vortrocknungsphase vorausgehen, beispielsweise bei Raumtemperatur für eine Zeitdauer von 1 bis 60 min. Welche Härtungsbedingungen bei welchen Substraten und/oder Beschichtungsmitteln anzuwenden sind, gehört zum allgemeinen Fachwissen auf dem Gebiet, sodass die Bedingungen vom Fachmann angepasst und ausgewählt werden können.

Die Applikation des wässrigen Beschichtungsmittels erfolgt in den üblichen und bekannten Schichtdicken, beispielsweise in Nassfilmschichtdicken von 10 bis 200 Mikrometer, vorzugsweise von 50 bis 150 Mikrometer. Die dabei resultierenden Trockenfilmschichtdicken nach der Härtung liegen dann beispielsweise im Bereich von 2 bis 40 Mikrometer, insbesondere 5 bis 20 Mikrometer.

Gemäß einer zweiten Ausführungsform (ii) der vorliegenden Erfindung umfasst das Beschichtungsmittel (A) mindestens eine Carben-bildende Verbindung (C). Im Rahmen dieser Ausführungsform wird die wie oben beschriebene Carben-bildenden Verbindung (C) jedenfalls nach der Applikation des Beschichtungsmittels (A) zur Carbenbildung aktiviert. Dies bedeutet demnach, dass in dieser Ausführungsform die Härtungsbedingungen so gewählt werden können, dass bei der Härtung ebenfalls eine Aktivierung stattfindet. Aus oben Gesagtem folgt, dass hierbei demnach die Härtung vorzugsweise bei Temperaturen von bevorzugt 60 bis 100°C über einen Zeitraum von 5 bis 120 Minuten erfolgt, da dann gleichzeitig eine thermolytische Aktivierung der Carben-bildenden Verbindung (C) resultieren kann. Natürlich kann die Aktivierung auch vor, während oder nach der Härtung photolytisch durchgeführt werden beziehungsweise eine kombinierte Aktivierung durch Thermolyse und Photolyse stattfinden. Letzteres ist insbesondere dann gegeben, wenn man während der durch Hitze (thermische Energie) initiierten Härtung das applizierte Beschichtungsmittel auch elektromagnetischer Strahlung, insbesondere UV-Strahlung, aussetzt. Für die photolytische Aktivierung gelten die schon oben für Ausführungsform (i) genannten bevorzugten Konditionen.

Sofern ausschließlich im Rahmen der zweiten Ausführungsform gearbeitet wird, insbesondere also keine Kombination von erster und zweiter Ausführungsform realisiert wird, wird das Beschichtungsmittel (A) bevorzugt direkt auf die Oberfläche (O) des Kunststoffsubstrats appliziert.

Für die Applikation und Härtung des Beschichtungsmittels (A) gilt im Rahmen der Ausführungsform (ii) ansonsten grundsätzlich das oben für Ausführungsform (i) Gesagte.

Bevorzugt ist die Ausführungsform (i) der vorliegenden Erfindung. Auf diese Weise wird eine besonders gute Haftung erzielt.

Ein weiterer Gegenstand der vorliegenden Erfindung ist ein beschichtetes Kunststoffsubstrat, welches dadurch gekennzeichnet ist, dass es durch das erfindungsgemäße Verfahren beschichtet wurde.

Auf dem wie bisher beschriebenen beschichteten Kunststoffsubstrat können weitere Beschichtungen hergestellt werden.

In einer bevorzugten Ausführungsform der Erfindung wird auf dem wie bisher beschriebenen beschichteten Kunststoffsubstrat ein weiteres Beschichtungsmittel appliziert und gehärtet beziehungsweise eine weitere gehärtete Beschichtung hergestellt. Insbesondere handelt es sich dabei um einen Klarlack beziehungsweise um eine Klarlackschicht. Bekanntermaßen ist ein Klarlack ein Beschichtungsstoff, der nach Applikation und Härtung eine transparente Beschichtung (die Klarlackschicht) mit schützenden und/oder dekorativen Eigenschaften bildet. Unter schützenden Eigenschaften sind beispielsweise Kratzfestigkeit und Witterungsbeständigkeit, insbesondere UV-Beständigkeit, zu verstehen. Als dekorative Eigenschaft ist beispielsweise ein guter Glanz zu verstehen. Bei den einzusetzenden Klarlacken handelt es sich um die auf dem Gebiet der Kunststofflackierung üblich verwendeten Klarlacke, deren Auswahl und Einsatz dem Fachmann bekannt ist (vergleiche hierzu auch Römpp-Lexikon Lacke und Druckfarben, Georg Thieme Verlag, Stuttgart, New York, 1998, Seite 325). Die generellen Applikations- und Härtungsmethoden des weiteren Beschichtungsmittels, insbesondere des Klarlacks, entsprechen denen, wie sie weiter oben für das wässrige Beschichtungsmittel beschrieben wurden. Bevorzugt wird eine solche, dann als klassische Mehrschichtbeschichtung zu bezeichnende Beschichtung durch nass-in-nass-Lackierung hergestellt. Dies bedeutet, dass das weitere Beschichtungsmittel, insbesondere der Klarlack, auf dem applizierten wässrigen Beschichtungsmittel (A) appliziert wird, ohne das letzteres zuvor separat gehärtet wird. Die Härtung der beiden applizierten Beschichtungsmittel erfolgt dann gemeinsam, wodurch die klassische Mehrschichtbeschichtung resultiert. Aus oben Gesagten folgt, dass insbesondere im Rahmen der nass-in-nass-Variante der Klarlack bevorzugt direkt auf die durch das Beschichtungsmittel (A) hergestellte Schicht appliziert wird. Die Verbindung (C) kann im Rahmen der Ausführungsform (ii) dabei demnach vor, während oder nach der Applikation des Klarlacks zur Carbenbildung aktiviert werden.

Die Applikation des weiteren Beschichtungsmittels, insbesondere des Klarlacks, erfolgt in den üblichen und bekannten Schichtdicken, beispielsweise in Nassfilmschichtdicken von 50 bis 250 Mikrometer, vorzugsweise von 100 bis 180 Mikrometer. Die dabei resultierenden Trockenfilmschichtdicken nach der Härtung liegen dann beispielsweise im Bereich von 15 bis 80 Mikrometer, insbesondere 25 bis 50 Mikrometer.

Insgesamt eignen sich damit die beschichteten Kunststoffsubstrate, die nach dem erfindungsgemäßen Verfahren beschichtet wurden, für das ästhetisch und technisch anspruchsvolle Gebiet der Fahrzeuglackierung, insbesondere der Automobillackierung. Die beschichteten Kunststoffsubstrate, insbesondere die mit einer Mehrschichtbeschichtung beschichteten Kunststoffsubstrate, können als Fahrzeugteile und Fahrzeuganbau- und -zubehörteile sowohl für den Innen- als auch im Außenbereich von Fahrzeugen verwendet werden. Neben einer hervorragenden Haftung der hergestellten Beschichtungen beziehungsweise Mehrschichtbeschichtungen, lässt sich zudem ein guter und variabler dekorativer Effekt erzielen.

Die nach dem erfindungsgemäßen Verfahren zur Beschichtung von Kunststoffsubstraten hergestellten Beschichtungen beziehungsweise Lackschichten besitzen zudem eine ausgezeichnete Haftung.

Aus oben Gesagtem folgt auch, dass die Verwendung von Verbindungen der Formel (I) zur Verbesserung der Haftung von auf Kunststoffsubstraten angeordneten Beschichtungen, die mittels wässriger Beschichtungsmittel hergestellt wurden, Gegenstand der vorliegenden Erfindung ist.

Die Erfindung wird anhand der folgenden Beispiele näher erläutert.

### Beispiele

Es wurden verschiedene Kunststoffsubstrate, jeweils in Form von Testplatten mit einer Größe von 10 x 10 x 0,3 cm oder 100 x 100 x 3 cm, mit unterschiedlichen wässrigen Beschichtungsmitteln beschichtet. Als Kunststoffwerkstoffe wurden PP-Platten (Daplen™ EE103AE (Borealis)) eingesetzt.

### A) Beschichtung von Kunststoffsubstraten

Zur Beschichtung eines Kunststoffsubstrats wurden die in den Tabellen 1 und 2 genannten Beschichtungsmittel (vergleiche auch zugehörige Erläuterungen) verwendet. Vor der Applikation mit diesen Beschichtungsmitteln wurde das Substrat wie nachstehend beschrieben mit einer Lösung von 4-[3-(Trifluoromethyl)-3H-diazirin-3-yl]benzoesäure (Verbindung (C), wobei R₁ = CF₃ und in R₂ folgendes gilt: R₃ = COOH, R₄ = H) behandelt (0,005 mol/l in Methylethylketon).

Bei dem zur Beschichtung eingesetzten wässrigen Beschichtungsmittel (A) handelte es sich um den gemäß Tabelle 1 zusammengesetzten wässrigen Basislack. Die Herstellung des Basislacks erfolgte durch Zusammengeben und innige Vermischung der in Tabelle 1 angegebenen Komponenten in einem Dissolver.

**Tabelle 1: Zusammensetzung des eingesetzten wässrigen Basislacks**

| **Komponente** | **Eingesetzte Gewichtsteile** |
|---|---|
| Handelsübliches Thixotropierungsmittel (Laponite RD) | 18,2 |
| handelsübliche Dispersion eines OHfunktionellen Polyurethanharzes (Wassergehalt: 66,0 Gew.-%, organische Lösemittel: 6,3 Gew.-%) | 31,9 |
| TMDD BG 52 (handelsübliches Netzmittel) | 0,5 |
| handelsübliche Dispersion eines OHfunktionellen Polyesterharzes (Wassergehalt: 17,7 Gew.-%, organische Lösemittel: 20,0 Gew.-%) | 3,0 |
| Butoxypropanol | 2,0 |
| Cymel 327 (handelsübliches Melaminformaldehydharz) | 4,2 |
| Neutralisationslösung (Dimethylethanolamin, 10% in Wasser) | 0,7 |
| handelsübliche Dispersion eines OHfunktionelle Acrylatharzes (Wassergehalt: 49,5 Gew.-%, organische Lösemittel: 13,0 Gew.-%) | 5,1 |
| Wasser | 2,1 |
| Foamstar MF324 (handelsüblicher Entschäumer) | 0,5 |
| Ethylhexanol | 3,9 |
| BYK 347 (handelsübliches Netzmittel) | 0,5 |
| Pluriol P900 (handelsübliches Polyethylenglycol) | 2,0 |
| Butyldiglykol | 4,7 |
| Isopropanol | 2,1 |
| Wasser | 1,8 |
| Neutralisationslösung (Dimethylethanolamin, 10% in Wasser) | 0,8 |
| Wasser | 2,2 |
| Viscalex HV 30 (handelsübliches Rheologiemittel) | 0,4 |
| Wasser | 2,0 |
| Tönpaste 1 (10-%-ige Dispersion des Pigments "Ruß Monarch 1400 in Wasser) | 10,1 |
| Tönpaste 2 (50-%-ige Dispersion des Pigments "Titanrutil 2310 in Wasser) | 0,1 |
| Wasser | 1,2 |

Weiterhin verwendet wurde ein handelsüblicher Klarlack (vergleiche Tabelle 2), der durch Zusammengeben und innige Vermischung der in Tabelle 2 angegebenen Komponenten in einem Dissolver hergestellt wurde.

**Tabelle 2, Zusammensetzung des eingesetzten Klarlacks**

| **Komponente** | **Menge (in Gew.-%)** |
|---|---|
| handelsübliche Dispersion eines OHfunktionelle Acrylatharzes in organischen Lösemitteln | 50,9 |
| Setal 82166 SS-55 | 25,5 |
| Cyclohexanon | 3,9 |
| Solvent Naphtha 230/290 | 2,0 |
| handelsübliche Dispersion eines OHfunktionelle Acrylatharzes in organischen Lösemitteln | 9,8 |
| Disolucion de Silicona F-2 | 1,5 |
| 5-%-ige Lösung von Baysilon OL44 | 0,5 |
| Tinuvin 292 (handelsüblicher Lichtstabilisator) | 0,9 |
| Tinuvin 1130 (handelsüblicher UV-Absorber) | 0,9 |
| 1-%-ige Lösung von Dibutylzinnlaurat | 0,6 |
| Cumylhydroperoxid (80-%-ig) | 0,4 |
| 1-Methoxypropylacetat-2 | 3,1 |

Die eigentliche Herstellung von Beschichtungen verlief wie folgt.

Zunächst wurde mittels Spritzapplikation die Lösung enthaltend die Diaziridin-haltige Verbindung (C) direkt auf ein Kunststoffsubstrat appliziert.

Im Anschluss daran wurde zunächst matt-abgelüftet (5 Minuten bei 20°C) und danach die applizierte Diaziridin-haltige Verbindung mit UV-Strahlung behandelt beziehungsweise aktiviert (2837 mJ pro cm² Kunststoffsubstrat). Die Aktivierung erfolgte unter Einsatz einer UV-Härtungsapparatur der Fa. IST Strahlentechnik Metz GmbH (Modelltyp M-40-2*1-R-Ir-SLC-So-inert, UV Lampentyp (Quecksilberdampflampentyp) M 400 U 2 H mit einem typischen UV-Emissionslinienspektrum mit Spektrallinien von 184 bis 365 Nanometern.

Auf das so vorbeschichtete Substrat wurde direkt der wässrige Basislack (Tabelle 1) pneumatisch appliziert und für 5 Minuten bei 20°C abgelüftet. Danach wurde direkt der Klarlack (Tabelle 2) pneumatisch appliziert und für 10 Minuten bei 20°C abgelüftet. Anschließend wurde bei einer Temperatur von 80°C über eine Zeitdauer von 30 min gehärtet. Die Trockenschichtdicken der Einzelschichten in der erfindungsgemäß hergestellten Mehrschichtbeschichtung (E1) betrugen 2 Mikrometer (Schicht basierend auf der Diaziridin-haltigen Verbindung), 15 Mikrometer (Basislackschicht) und 42 Mikrometer (Klarlackschicht).

Neben der Mehrschichtbeschichtung (E1) wurden analog der oben genannten Vorschrift weitere Mehrschichtbeschichtungen hergestellt. In der Mehrschichtbeschichtung (E2) wurde allerdings eine andere Verbindung (C), nämlich 4-[3-(Trifluoromethyl)-3H-diazirin-3-yl]benzylalkohol (Verbindung (C), wobei R₁ = CF₃ und in R₂ folgendes gilt: R₃ = CH₂-OH, R₄ = H), eingesetzt. In der Vergleichsmehrschichtbeschichtung (V1) wurde keine Verbindung (C) eingesetzt, sondern das Carben 3-Phenyl-3-(trifluoromethyl)-3H-diaziridin (Verbindung ähnlich Formel (I), wobei aber R₁ = CF₃ und in R₂ folgendes gilt: R₃ = R₄ = H). Bei der Herstellung der Mehrschichtbeschichtungen (V2) und (V3) wurde ebenfalls auf die Applikation und Aktivierung einer Verbindung (C) verzichtet. Es wurde allerdings überhaupt kein Carben eingesetzt (die Schritte der entsprechenden Applikation und Aktivierung wurden also ausgelassen). Während bei (V2) lediglich die genannten Schritte ausgelassen wurden, wurde bei der Mehrschichtbeschichtung (V3) anstelle der Applikation und Aktivierung der oben genannten Diaziridin-haltigen Verbindung (C) das Kunststoffsubstrat vor der Applikation des Basislacks (A) durch übliche Beflammung vorbehandelt (mittels eines handelsüblichen Beflammungsautomaten der Firma Kirchgässner Elektrotechnik).

Tabelle 3 zeigt einen Überblick über die hergestellten Mehrschichtbeschichtungen. Alle Mehrschichtbeschichtungen umfassen eine Basislackschicht und eine Klarlackschicht.

**Tabelle 3: Mehrschichtbeschichtungen**

| **Mehrschichtbeschichtung** | **Spezifizierung** |
|---|---|
| (E1) | 4-[3-(Trifluoromethyl)-3H-diazirin-3-yl]benzoesäure (Verbindung (C), wobei R₁ = CF₃ und in R₂ folgendes gilt: R₃ = COOH, R₄ = H) |
| (E2) | 4-[3-(Trifluoromethyl)-3H-diazirin-3-yl]benzylalkohol (Verbindung (C), wobei R₁ = CF₃ und in R₂ folgendes gilt: R₃ = CH₂-OH, R₄ = H) |
| (V1) | 3-Phenyl-3-(trifluoromethyl)-3H-diaziridin (Verbindung ähnlich Formel (I), wobei aber R₁ = CF₃ und in R₂ folgendes gilt: R₃ = R₄ = H) |
| (V2) | Kein Carben |
| (V3) | Kein Carben, aber Beflammung |

### B) Untersuchung der Haftungseigenschaften von Beschichtungen

Die Haftungseigenschaften der herstellten Beschichtungen wurden über einen allgemein bekannten Dampfstrahltest (DIN 55662:2009-12, 1 min Dampfbestrahlung bei 60°C, Druck 67 bar, senkrechte Entfernung vom Prüfkörper 10 cm) untersucht.

Die Bewertung der Haftung erfolgte über eine ganzzahliges Notensystem mit Noten von 0 - 5, wobei die Note 0 für Beschichtungen vergeben wurde, die nach der Dampfstrahlbehandlung keine sichtbaren Spuren aufwiesen (sehr gute Haftung), die Note 5 für Beschichtungen vergeben wurde, die nach dem Dampfstrahltest sehr stark abgelöste Bereiche aufwiesen (ungenügende Haftung).

Tabelle 4 zeigt die Haftungseigenschaften der hergestellten Beschichtungen in Abhängigkeit von den eingesetzten Kunststoffsubstraten und deren Vorbehandlung.

**Tabelle 4: Haftungseigenschaften der Mehrschichtbeschichtungen**

| **Mehrschichtbeschichtung** | **Ergebnis Haftung** |
|---|---|
| (E1) | 0 |
| (E2) | 0 |
| (V1) | 5 |
| (V2) | 5 |
| (V3) | 2 |

Die Ergebnisse zeigen, dass die nach dem erfindungsgemäßen Verfahren aufgebauten Mehrschichtbeschichtungen eine deutlich bessere Haftung aufweisen, als dies bei den Mehrschichtbeschichtungen (V1) und (V2) (Verzicht auf den Einsatz einer Verbindung (C) beziehungsweise irgendeines Carbens) der Fall ist. Der Vergleich mit den Ergebnissen für die Mehrschichtbeschichtung (V3) zeigt zudem noch den überraschenden Vorteil des erfindungsgemäßen Verfahrens insbesondere bei der Beschichtung von unpolaren Kunststoffsubstraten (hier PP). Trotz des Ersatzes der Applikation und Aktivierung einer Verbindung (C) durch übliches Beflammen ist die Haftung der Mehrschichtbeschichtung (V3) signifikant schlechter, als dies für die sehr gut haftenden Mehrschichtbeschichtungen (E1) und (E2) der Fall ist.

## Patentansprüche

1. Verfahren zur Beschichtung von Kunststoffsubstraten mit einem wässrigen Beschichtungsmittel (A) enthaltend mindestens ein organisches Polymer als Bindemittel, wobei das Beschichtungsmittel auf mindestens eine Oberfläche (O) des Kunststoffsubstrats appliziert wird und anschließend gehärtet wird,
**dadurch gekennzeichnet, dass**
(i) vor der Applikation des Beschichtungsmittels (A) eine Carben-bildende Verbindung (C) der folgenden Formel (I) 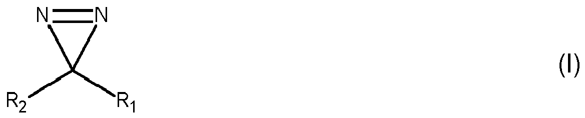 mit
R₁ = -(CX₂)ₙX, wobei X = F oder Cl und n = 0 oder 1 ist,
R₂ = 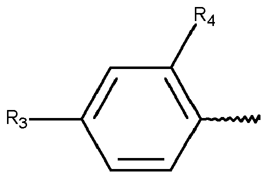 mit
R₃, R₄ unabhängig voneinander = -H, -(CH₂)ₘY, wobei Y = OH, CO₂H, NH₂ oder Br und m = 0 bis 4 ist,
wobei R₃ = R₄ = -H ausgeschlossen ist,
direkt auf die Oberfläche (O) appliziert wird sowie zur Carbenbildung aktiviert wird und/oder (ii) das Beschichtungsmittel (A) die Carben-bildende Verbindung (C) enthält und diese nach der Applikation des Beschichtungsmittels (A) zur Carbenbildung aktiviert wird.

2. Verfahren nach Anspruch 1, **dadurch gekennzeichnet, dass** das wässrige Beschichtungsmittel einen Gesamtanteil von 15 bis 60 Gew.-%, bezogen auf die Gesamtmenge des Beschichtungsmittels, mindestens eines organischen OHfunktionellen Polymers als Bindemittel und mindestens eines Vernetzers, ausgewählt aus der Gruppe der vollveretherten und/oder teilveretherten Aminoplastharze, der monomeren und/oder polymeren Polyamine und/oder der monomeren und/oder polymeren blockierten und/oder freien Polyisocyanate, enthält.

3. Verfahren nach einem der Ansprüche 1 oder 2, **dadurch gekennzeichnet, dass** das wässrige Beschichtungsmittel mindestens 20 Gew.-% Wasser, bezogen auf die Gesamtmenge des Beschichtungsmittels, enthält.

4. Verfahren nach einem der Ansprüche 1 bis 3, **dadurch gekennzeichnet, dass** das wässrige Beschichtungsmittel ein pigmentierter Basislack ist.

5. Verfahren nach einem der Ansprüche 1 bis 4, **dadurch gekennzeichnet, dass** das Kunststoffsubstrat Kunststoffe ausgewählt aus der Gruppe bestehend aus Polystyrol (PS), Polyvinylchlorid (PVC), Polyurethan (PUR), glasfaserverstärkte ungesättigte Polyester, Polymethylmethacrylat (PMMA), Polyphenylensulfid (PPS), Polyoxymethylen (POM), Polyphenylenether (PPE), Polyphenylenoxid (PPO), Polyharnstoff, Polybutadienterephthalat (PBT), Polycarbonat (PC), Acrylnitril-Butadien-Styrol-Copolymere (ABS), Polyolefine wie Polypropylen (PP), gegebenenfalls modifiziert mit Ethylen-Propylen-Dien-Mischpolymeren (EPDM), sowie Mischungen dieser Kunststoffe, bevorzugt Polyolefine, enthält.

6. Verfahren nach einem der Ansprüche 1 bis 5, **dadurch gekennzeichnet, dass** für die Verbindung (C) der Formel (I) R₁ = -CF₃, R₃ = -OH, -CO₂H, -CH₂OH, -CH₂CO₂H und R₄ = -H gilt.

7. Verfahren nach einem der Ansprüche 1 bis 6, **dadurch gekennzeichnet, dass** für die Verbindung (C) der Formel (I) R₁ = -CF₃, R₃ = -CO₂H oder -CH₂OH und R₄ = -H gilt.

8. Verfahren nach einem der Ansprüche 1 bis 7, **dadurch gekennzeichnet, dass** die Aktivierung der Verbindung (C) zur Carbenbildung die Aussetzung der Verbindung (C) mit UV-Strahlung umfasst.

9. Verfahren nach einem der Ansprüche 1 bis 8, **dadurch gekennzeichnet, dass** vor der Applikation des Beschichtungsmittels (A) die Carben-bildende Verbindung (C) direkt auf die Oberfläche (O) des Substrats appliziert wird sowie zur Carbenbildung aktiviert wird.

10. Verfahren nach Anspruch 9, **dadurch gekennzeichnet, dass** die Verbindung (C) in Form einer Lösung in einem organischen Lösemittel appliziert wird.

11. Verfahren nach einem der Ansprüche 1 bis 10, **dadurch gekennzeichnet, dass** nach der Applikation des wässrigen Beschichtungsmittels (A) mindestens ein weiteres Beschichtungsmittel appliziert und gemeinsam mit dem applizierten Beschichtungsmittel (A) gehärtet wird, wobei es sich bei mindestens einem der weiteren Beschichtungsmittel um einen Klarlack handelt.

12. Beschichtung, welche nach einem Verfahren gemäß einem der Ansprüche 1 bis 11 hergestellt wurde.

13. Beschichtetes Kunststoffsubstrat, **dadurch gekennzeichnet, dass** es durch das Verfahren gemäß einem der Ansprüche 1 bis 11 beschichtet wurde.

14. Beschichtetes Kunststoffsubstrat nach Anspruch 13, **dadurch gekennzeichnet, dass** es mit einer Mehrschichtbeschichtung, umfassend einen Basislack und einen Klarlack, beschichtet ist.

15. Verwendung einer Verbindung (C) der folgenden Formel (I) 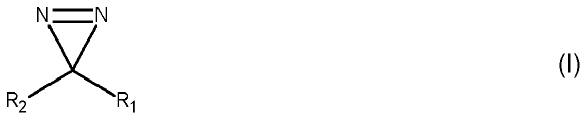 mit
R₁ = -(CX₂)ₙX, wobei X = F oder Cl und n = 0 oder 1 ist,
R₂ = 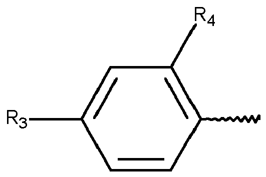 mit
R₃, R₄ unabhängig voneinander = -H, -(CH₂)ₘY, wobei Y = OH, CO₂H, NH₂ oder Br und m = 0 bis 4 ist,
wobei R₃ = R₄ = -H ausgeschlossen ist,
zur Verbesserung der Haftung von auf Kunststoffsubstraten angeordneten Beschichtungen, die mittels wässriger Beschichtungsmittel hergestellt wurden.
